# EUROPEAN PATENT SPECIFICATION

(11) **EP 4 393 722 B1**
(45) Date of publication and mention of the grant of the patent: **29.07.2026**
(21) Application number: 22861240.4
(22) Date of filing: 18.08.2022
(51) Int. Cl.: B60C 9/20, B60C 9/22, B60C 9/28, B60C 9/00

(54) **PNEUMATIC TIRE**
LUFTREIFEN
PNEUMATIQUE

(30) Priority: 24.08.2021 JP 2021135988
(43) Date of publication of application: 03.07.2024
(73) Proprietor: The Yokohama Rubber Co., Ltd., Hiratsuka-shi, Kanagawa 254-8601 (JP)
(72) Inventor: FUJIMORI Hiroki, Hiratsuka-shi, Kanagawa 254-8601 (JP); HARIKAE Shinya, Hiratsuka-shi, Kanagawa 254-8601 (JP)
(74) Representative: Dilg, Haeusler, Schindelmann Patentanwaltsgesellschaft mbH
(86) International application number: PCT/JP2022/031215
(87) International publication number: WO 2023/026952

(56) References cited:
- WO-A1-2020/170573
- JP-A- 2002 079 806
- JP-A- 2002 192 907
- JP-A- H07 156 607
- US-A1- 2002 088 523

## Description

### Technical Field

The present invention relates to a pneumatic tire provided with a belt reinforcing layer formed of an organic fiber cord and particularly relates to a pneumatic tire that can improve steering stability under normal travel conditions and during circuit running while maintaining durability.

### Background Art

In pneumatic tires, a carcass layer is mounted between a pair of bead portions, a plurality of belt layers are disposed on an outer circumferential side of the carcass layer in a tread portion, and a belt reinforcing layer including a plurality of organic fiber cords helically wound along a tire circumferential direction is disposed on an outer circumferential side of the belt layers. Such a belt reinforcing layer suppresses rising of a belt end portion at high speeds, and thus, contributes to improved high-speed durability.

Although a nylon fiber cord is mainly used as the organic fiber cord used in such a belt reinforcing layer, using a polyethylene terephthalate fiber cord (hereinafter referred to as a PET fiber cord) that is highly elastic and inexpensive compared to the nylon fiber cord has been proposed (for example, see Patent Document 1). However, the elastic modulus (rigidity) of the PET fiber cord is temperature dependent, and at extremely high speeds such as during circuit running, the elastic modulus (rigidity) may decrease and that steering stability may decline. Therefore, there is a demand for a pneumatic tire provided with a belt reinforcing layer formed of PET fiber cords to improve durability and steering stability under normal travel conditions and during circuit running.

Furthermore, in a pneumatic tire including a plurality of belt layers and a belt reinforcing layer formed of PET fiber cords, there is a problem in that latent strain during running is large at an end portion in the tire width direction of the belt layer located on the innermost side in the tire radial direction, and separation is likely to occur between the belt layer and the belt reinforcing layer.

### Citation List

### Patent Literature

Patent Document 1: JP 2001-63312 A

Further relevant prior art disclosing pneumatic tires comprising two belt layers disposed on an outer circumferential side of a carcass layer in the tread portion, wherein the belt layers being formed of belt cords that are monofilament wires are known from WO 2020/170573 A1 and US 2002/088523 A1. Documents JP 2002 192907, JP H07 156607 A and JP 2002 079806 A disclose tyres with belt layers and belt reinforcing layers disposed on an outer circumferential side of the belt layers.

### Summary of Invention

### Technical Problem

An object of the present invention is to provide a pneumatic tire that is provided with a belt reinforcing layer formed of organic fiber cords, the pneumatic tire allowing for improved steering stability under normal travel conditions and during circuit running while maintaining durability.

### Solution to Problem

A pneumatic tire according to an embodiment of the present invention for achieving the object described above is defined by the features of clam 1.

### Advantageous Effects of Invention

The present inventors have arrived at the present invention by finding that steering stability under normal travel conditions and during circuit running can be improved while maintaining durability by employing a belt layer formed of monofilament wires having a predetermined wire diameter and a belt reinforcing layer formed of highly rigid organic fiber cords in a pneumatic tire, and by further acquiring knowledge that the effect of improving the above-described tire performance can be enhanced by devising the end positions of the belt reinforcing layer in the tire width direction.

That is, in an embodiment of the present invention, as described above, an organic fiber cord formed of a highly rigid polyethylene terephthalate fiber (PET fiber) and having an elongation under a load of 2.0 cN/dtex of from 2.0% to 4.0% is used in the belt reinforcing layer, and thus steering stability under normal travel conditions can be improved. Additionally, the belt reinforcing layer can effectively suppress rising of a belt end portion at high speeds and thus improve high-speed durability. On the other hand, since a monofilament wire is used in the belt layer, elongation of the belt cord can be suppressed, and the belt layer can be made thinner. Thus, heat build-up can be suppressed even at extremely high speeds such as during circuit running. Accordingly, a reduction in the elastic modulus (rigidity) of the belt reinforcing layer (PET fiber cord) can be prevented, and steering stability at extremely high speeds can be favorably ensured. Furthermore, since the end in the tire width direction of the belt reinforcing layer is disposed between the end in the tire width direction of the inner belt layer located on the inner side of the belt layer in the tire radial direction and the end in the tire width direction of the outer belt layer located on the outer side of the belt layer in the tire radial direction, stress concentration at the end portion of the outer belt layer in the tire width direction can be suppressed, and shear stress between the belt reinforcing layer and the inner belt layer can be suppressed. Thus, durability against belt edge separation can be improved.

In the pneumatic tire of the present invention, a width W_{c} between both ends of the belt reinforcing layer in the tire width direction, a width W_{b1} between both ends of the inner belt layer in the tire width direction, and a width W_{b2} between both ends of the outer belt layer in the tire width direction satisfy a relationship of 0.40 ≤ (W_{c} - W_{b2})/(W_{b1} - W_{b2}) ≤ 0.60. As a result, the stress concentration at the end portion of the outer belt layer in the tire width direction can be suppressed, and the shear stress between the belt reinforcing layer and the inner belt layer can be suppressed. Thus, belt edge separation can be more effectively prevented.

### Brief Description of Drawings

FIG. 1 is a meridian cross-sectional view illustrating a pneumatic radial tire according to an embodiment of the present invention.
FIG. 2 is an explanatory diagram schematically illustrating a disposition of a belt layer (monofilament wires).
FIG. 3 is an explanatory diagram schematically illustrating a disposition of ends of a belt layer and a belt reinforcing layer.

### Description of Embodiments

Configurations of embodiments of the present invention will be described in detail below with reference to the accompanying drawings.

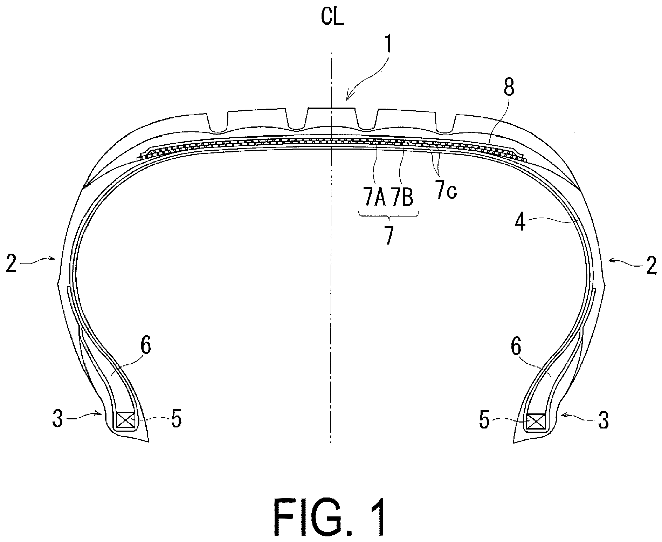

As illustrated in FIG. 1, a pneumatic tire according to an embodiment of the present invention includes a tread portion 1, a pair of sidewall portions 2 respectively disposed on both sides of the tread portion 1, and a pair of bead portions 3 each disposed on an inner side of the pair of sidewall portions 2 in a tire radial direction. "CL" in FIG. 1 denotes a tire equator. Although not illustrated in FIG. 1, which is a meridian cross-sectional view, the tread portion 1, the sidewall portions 2, and the bead portions 3 each extend in a tire circumferential direction and having an annular shape. This forms a toroidal basic structure of the pneumatic tire. Although the description with reference to FIG. 1 is basically based on the illustrated meridian cross-sectional shape, all of the tire components extend in the tire circumferential direction and form the annular shape.

In the illustrated example, a plurality of main grooves (four main grooves in the illustrated example) extending in the tire circumferential direction is formed in the outer surface of the tread portion 1; however, the number of main grooves is not limited. In addition to the main grooves, various grooves and sipes that include lug grooves extending in a tire width direction can also be formed.

At least one carcass layer 4 (one layer in the illustrated example) including a plurality of reinforcing cords extending in the tire radial direction is mounted between the pair of left and right bead portions 3. A bead core 5 is embedded within each of the bead portions 3, and a bead filler 6 having an approximately triangular cross-sectional shape is disposed on an outer periphery of the bead core 5. The carcass layer 4 is folded back around the bead core 5 from an inner side to an outer side in the tire width direction. Accordingly, the bead core 5 and the bead filler 6 are wrapped by a body portion (a portion extending from the tread portion 1 through each of the sidewall portions 2 to each of the bead portions 3) and a folded back portion (a portion folded back around the bead core 5 of each bead portion 3 to extend toward each sidewall portion 2 side) of the carcass layer 4.

On the other hand, two belt layers 7 are embedded on the outer circumferential side of the carcass layer 4 in the tread portion 1. That is, the belt layers 7 include an inner belt layer 7A located on the inner side in the tire radial direction and an outer belt layer 7B located on the outer side in the tire radial direction. The inner belt layer 7A is wider than the outer belt layer 7B. The belt layers 7 include a plurality of belt cords 7c inclined with respect to the tire circumferential direction and are arranged so that the belt cords 7c intersect each other between layers. In the belt layers 7, an inclination angle of the belt cord 7c with respect to the tire circumferential direction is set within a range, for example, from 10° to 40°.

A belt reinforcing layer 8 is provided on an outer circumferential side of the belt layer 7 for the purpose of improving high-speed durability and reducing road noise. The belt reinforcing layer 8 includes a belt reinforcing cord oriented in the tire circumferential direction. In the belt reinforcing layer 8, an angle of the belt reinforcing cord with respect to the tire circumferential direction is set within, for example, from 0° to 5°. In the present invention, the belt reinforcing layer 8 necessarily includes a full cover layer covering the entire region of the outer belt layer 7B constituting the belt layer 7. Optionally, the belt reinforcing layer 8 can also be configured to include a pair of edge cover layers so as to locally cover both end portions of the full cover layer in the tire width direction. Preferably, the belt reinforcing layer 8 is configured such that a strip material made of at least one belt reinforcing cord arranged and covered with coating rubber is wound helically in the tire circumferential direction. In particular, the belt reinforcing layer 8 desirably has a jointless structure.

Since the present invention relates to the belt cord forming the belt layer 7 and the belt reinforcing cord forming the belt reinforcing layer 8, the basic overall structure of the tire is not limited to that described above.

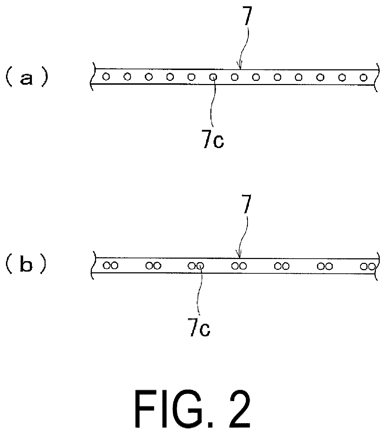

In the present invention, as illustrated in FIGS. 2(a) and (b), the belt cord 7c forming the belt layer 7 is not a twisted cord formed by twisting a plurality of wire strands together, but is formed of a monofilament wire made of steel. A wire diameter of the monofilament wire is 0.30 mm or more, and preferably 0.32 mm or more. Accordingly, use of the monofilament wire in the belt layer 7 can suppress elongation of the belt cord 7c and make the belt layer 7 thinner, and can thus suppress heat build-up even at extremely high speeds such as during circuit running. Note that from a perspective of making the belt layer 7 thinner, a wire diameter of the monofilament wire is 0.45 mm or less, and preferably 0.40 mm or less.

When forming the belt layer 7 with the monofilament wires, as illustrated in FIG. 2(a), the monofilament wires may be arrayed at intervals one by one, or, as illustrated in FIG. 2(b), a plurality of the monofilament wires (two in the drawing) may be arranged with each other and the arranged monofilament wires may be arrayed at intervals. At this time, an interval between the monofilament wires (an interval between the plurality of the monofilament wires that are arranged with each other) is preferably set within, for example, from 0.30 mm to 1.80 mm.

The specific structure of the monofilament wire is not particularly limited as long as the monofilament wire satisfies the wire diameter described above. Various types of monofilament wires that can be used in pneumatic tires can be adopted, including a monofilament wire that is twisted around a wire axis (twisted monofilament), a monofilament wire having a flat cross-sectional shape (flat monofilament), a monofilament wire formed in a helical shape (spiral monofilament), and a monofilament wire formed in a wavy planar shape (2-dimensional wavy monofilament).

When a product of a unit mass (g/m) of the monofilament wire and a wire count of the monofilament wires per 50 mm width (wires/50 mm) in a direction orthogonal to a longitudinal direction of the monofilament wire is defined as an amount of wire, the amount of wire is within a range of from 50 to 280. Such a favorable structure of the belt layer 7 is advantageous in improving steering stability while maintaining durability. When the amount of wire is less than 50, a proportion of the monofilament wires in the belt layer 7 is so small that steering stability may decline. When the amount of wire exceeds 280, belt edge separation may occur.

In an embodiment of the present invention, a polyester fiber cord having an elongation under a load of 2.0 cN/dtex of from 2.0% to 4.0%, or preferably from 2.6% to 3.4%, is used as the belt reinforcing cord forming the belt reinforcing layer 8. Examples of the polyester fiber can include a polyethylene terephthalate fiber (PET fiber). Note that in an embodiment of the present invention, the elongation under a load of 2.0 cN/dtex is an elongation percentage (%) of a sample cord, which is measured under a load of 2.0 cN/dtex by conducting a tensile test in accordance with JIS-L1017 "Test methods for chemical fibre tire cords" and under the conditions that a length of specimen between grips be 250 mm and a tensile speed be 300 ± 20 mm/minute.

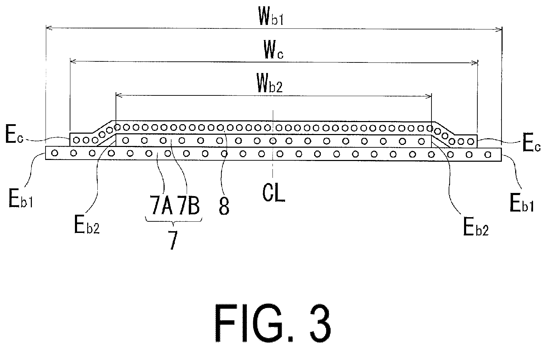

In the above-described pneumatic tire, as illustrated in FIG. 3, an end E_{c} of the belt reinforcing layer 8 in the tire width direction is disposed, on each of both sides of the tire equator CL, between an end E_{b1} of the inner belt layer 7A in the tire width direction and an end E_{b2} of the outer belt layer 7B in the tire width direction. That is, the end E_{c} of the belt reinforcing layer 8 in the tire width direction is disposed so as to protrude toward the outer side in the tire width direction from the end E_{b2} of the outer belt layer 7B, and is disposed on the inner side with respect to the end E_{b1} of the inner belt layer 7A in the tire width direction without reaching the end E_{b1}. In this case, a width W_{b1} between both ends E_{b1} of the inner belt layer 7A is the largest, a width W_{c} between both ends E_{c} of the belt reinforcing layer 8 is the second largest, and a width W_{b2} between both ends E_{b2} of the outer belt layer 7B is the smallest. In particular, the end E_{c} of the belt reinforcing layer 8 is preferably disposed, on each of both sides of the tire equator CL, in the vicinity of an intermediate position between the end E_{b1} of the inner belt layer 7A and the end E_{b2} of the outer belt layer 7B. Note that the projection portion of the belt reinforcing layer 8 projecting toward the outer side in the tire width direction from the end E_{b2} of the outer belt layer 7B is bent along the tire radial direction and is adjacent to the inner belt layer 7A.

Thus, the belt layer 7 formed of the monofilament wires of a particular wire diameter and the belt reinforcing layer 8 formed of the organic fiber cord having the specific physical properties can be used in combination in a pneumatic tire according to an embodiment of the present invention to improve steering stability under normal travel conditions and during circuit running while maintaining durability. That is, in the belt reinforcing layer 8, the polyethylene terephthalate fiber (PET fiber) having the physical properties described above and thus having high rigidity can be used to improve steering stability under normal travel conditions. Additionally, the belt reinforcing layer 8 effectively suppresses the rising of the belt end portion at high speeds, and thus, can improve high-speed durability as well. On the other hand, in the belt layer 7, the monofilament wire described above can be used to suppress the elongation of the belt cord 7c and to make the belt layer 7 thinner, thus suppressing heat build-up even at extremely high speeds such as during circuit running. Accordingly, a reduction in the elastic modulus (rigidity) of the belt reinforcing layer 8 (PET fiber cord) can be prevented, and steering stability at extremely high speeds can be favorably ensured. Furthermore, since the end E_{c} of the belt reinforcing layer 8 is disposed between the end E_{b1} of the inner belt layer 7A and the end E_{b2} of the outer belt layer 7B, the stress concentration at the end portion of the outer belt layer 7B in the tire width direction can be suppressed, and the shear stress between the belt reinforcing layer 8 and the inner belt layer 7A can be suppressed. Thus, durability against belt edge separation can be improved.

Here, in a configuration in which the twisted cord is used, instead of the monofilament wire, as the belt cord that forms the belt layer 7, elongation may be caused in the belt cord by the twisted structure, and the belt layer 7 cannot be made thinner, and thus, the effects described above cannot be obtained. When the wire diameter of the monofilament wire is less than 0.30 mm, the monofilament wire is too thin to ensure sufficient durability of the wire itself, and steering stability tends to decrease. When the wire diameter of the monofilament wire exceeds 0.45 mm, the belt layer 7 cannot be made sufficiently thinner and separation is more likely to occur than when using a known twisted cord. When the elongation under a load of 2.0 cN/dtex of the organic fiber cord forming the belt reinforcing layer 8 is less than 2.0%, the rigidity of the organic fiber cord is so high that shear stress increases between the belt layer 7 and the belt reinforcing layer 8, and durability against separation decreases. When the elongation under a load of 2.0 cN/dtex of the organic fiber cord forming the belt reinforcing layer 8 exceeds 4.0%, the rigidity of the belt reinforcing layer 8 is too low to obtain good steering stability.

In addition, when the end E_{c} of the belt reinforcing layer 8 is on the outer side with respect to the end E_{b1} of the inner belt layer 7A in the tire width direction, shear stress is generated between the belt reinforcing layer 8 and the inner belt layer 7A, and separation is likely to occur. On the other hand, when the end E_{c} of the belt reinforcing layer 8 is on the inner side with respect to the end E_{b2} of the outer belt layer 7B in the tire width direction, stress concentrates at the end portion of the outer belt layer 7B in the tire width direction, and separation is likely to occur between the inner belt layer 7A and the outer belt layer 7B.

In the above-described pneumatic tire, the width W_{c} of the belt reinforcing layer 8, the width W_{b1} of the inner belt layer 7A, and the width W_{b2} of the outer belt layer 7B satisfy the relationship 0.40 ≤ (W_{c} - W_{b2})/(W_{b1} - W_{b2}) ≤ 0.60. This means that the closer the value calculated by the above-described relational expression to 0, the closer the end E_{c} of the belt reinforcing layer 8 to the end E_{b2} of the outer belt layer 7B, whereas the closer the value calculated by the above-described relational expression to 1.0, the closer the end E_{c} of the belt reinforcing layer 8 to the end E_{b1} of the inner belt layer 7A. By setting the belt reinforcing layer 8, the inner belt layer 7A, and the outer belt layer 7B so as to satisfy the above-described relationship, it is possible to suppress stress concentration at the end portion of the outer belt layer 7B in the tire width direction, and to suppress shear stress between the belt reinforcing layer 8 and the inner belt layer 7A. Thus, belt edge separation can be more effectively prevented.

Note that the width W_{b1} between both ends E_{b1} of the inner belt layer 7A in the tire width direction, the width W_{b2} between both ends E_{b2} of the outer belt layer 7B in the tire width direction, and the width W_{c} between both ends E_{c} of the belt reinforcing layer 8 in the tire width direction are the average values of the widths (mm) of each member measured at three locations where the tread portion of the tire is peeled off and the tire circumference is evenly divided into three parts.

Here, in a case where the end E_{c} of the belt reinforcing layer 8 is close to the end E_{b1} of the inner belt layer 7A, that is, in a case where the value calculated by the above-described relational expression is larger than 0.80, shear stress is generated between the belt reinforcing layer 8 and the inner belt layer 7A, and separation tends to occur. On the other hand, in a case where the end E_{c} of the belt reinforcing layer 8 is close to the end E_{b2} of the outer belt layer 7B, that is, in a case where the value calculated by the above-described relational expression is smaller than 0.20, stress concentrates at the end portion of the outer belt layer 7B in the tire width direction, and separation tends to occur between the inner belt layer 7A and the outer belt layer 7B.

In order to obtain the belt reinforcing cord (PET fiber cord) having the physical properties described above, dip processing may be optimized, for example. In other words, before a calendering process, dip processing with an adhesive is performed on the belt reinforcing cord (PET fiber cord); however, preferably, in a normalizing process after a two-bath treatment, an ambient temperature is set within a range of from 210°C to 250°C and a cord tension is set within a range of 2.2 × 10⁻² N/tex to 6.7 × 10⁻² N/tex. Accordingly, the desired physical properties as described above can be imparted to the belt reinforcing cord (PET fiber cord). When the cord tension in the normalizing process is smaller than 2.2 × 10⁻² N/tex, cord elastic modulus decreases, and steering stability declines. In contrast, when the cord tension is greater than 6.7 × 10⁻² N/tex, cord elastic modulus increases, and thus separation is likely to occur.

In the above-described pneumatic tire, an example in which the belt reinforcing layer 8 is a single layer is shown, but the belt reinforcing layer 8 is not limited thereto, and the belt reinforcing layer 8 can be also composed of a plurality of layers. In this case, the structure of the present invention described above is applied to the end E_{c} in the tire width direction of the maximum-width layer of the belt reinforcing layer 8 covering the entire region of the outer belt layer 7B.

### Examples

Tires of Conventional Example 1, Comparative Examples 1 to 4, and Examples 1 to 4 were manufactured. The tires have a tire size of 235/40R18, have the basic structure illustrated in FIG. 1, and vary, as indicated in Table 1, in the structure of a belt cord forming the belt layer, the wire diameter (cord diameter), the type of organic fiber used in the organic fiber cord forming the belt reinforcing layer, the elongation under a load of 2.0 cN/dtex of the organic fiber cord, and the relationship between the widths of the belt layer and the belt reinforcing layer.

In each of the examples, the belt reinforcing layer has a jointless structure in which a strip made of one organic fiber cord (nylon 66 fiber cord or PET fiber cord) arranged and covered with coating rubber is wound helically in the tire circumferential direction. The cord density in the strip is 50 cords/50 mm. In addition, the organic fiber cord (nylon 66 fiber cord or PET fiber cord) has a structure of 1400 dtex/2 in Conventional Example 1 and a structure of 1100 dtex/2 in the other examples. In Comparative Examples 1 to 4 and Examples 1 to 4, the widths (W_{b1}, W_{b2}) of the belt layers are the same, but the widths (W_{c}) of the belt reinforcing layers are different.

In the column of the "type of organic fiber" in Table 1, the nylon 66 fiber cord is indicated as "N66" and the PET fiber cord is indicated as "PET". In addition, in the column of "relationship between widths of belt layer and belt reinforcing layer" in Table 1, a value calculated by the expression (W_{c} - W_{b2})/(W_{b1} - W_{b2}) is shown. The calculated value (1.10) of Comparative Example 1 means that the end position of the belt reinforcing layer is on the outer side with respect to the end position of the inner belt layer in the tire width direction, and the calculated value (-0.10) of Comparative Example 2 means that the end position of the belt reinforcing layer is on the inner side with respect to the end position of the outer belt layer in the tire width direction.

The test tires were evaluated, according to the following evaluation method, for steering stability under normal travel conditions, steering stability during circuit running, and tire durability, and the results are also shown in Table 1.

Steering stability (under normal travel conditions, during circuit running):
The test tires were assembled on wheels having a rim size of 18 × 8 J, mounted on a test vehicle (engine displacement 3000 cc), and inflated to an air pressure of 230 kPa. Sensory evaluation was performed by five test drivers on a test course with a paved road for steering stability under two conditions: a speed of from 30 km/h to 100 km/h (under normal travel conditions) and a speed of from 100 km/h to 270 km/h (during circuit running). The evaluation results were scored by a 5-point method with the results of Conventional Example 1 being assigned the value of 3 points (reference), and an average value of the scores of the five test drivers was indicated. Larger values indicate superior steering stability at high speeds.

### Tire durability:

The test tires were mounted on wheels having a rim size of 18 × 8 J and inflated with oxygen to an internal pressure of 230 kPa. The tires were held for two weeks in a chamber maintained at a chamber temperature of 60°C, and then oxygen inside the test tires was released, and the test tires were filled with air to an internal pressure of 160 kPa. A drum testing machine having a smooth drum surface formed of steel and having a diameter of 1707 mm was used to run the pre-treated test tires 5000 km for 100 hours under fluctuating conditions including an ambient temperature of 38 ± 3°C, a running speed of 50 km/hr, a slip angle of 0 ± 3°, and a maximum load of 70 ± 40%, with the load and the slip angle fluctuated by a rectangular wave of 0.083 Hz. After the running, the tires were cut open, and a separation length (mm) in a width direction was measured at an end portion in a belt width direction. The evaluation results are expressed as index values using reciprocals of measurement values, with Conventional Example 1 being assigned an index value of 100. Larger index values indicate a smaller separation length and more excellent durability against belt-edge-separation.

**Table 1-1**

| | | | Conventional Example 1 | Comparative Example 1 | Comparative Example 2 | Example 1 | Example 2 |
|---|---|---|---|---|---|---|---|
| Belt layer | Belt cord structure | | Monofilament wire | Monofilament wire | Monofilament wire | Monofilament wire | Monofilament wire |
| | Wire diameter (cord diameter) | mm | 0.32 | 0.32 | 0.32 | 0.32 | 0.32 |
| Belt reinforcing layer | Type of organic fiber | | N66 | PET | PET | PET | PET |
| | Elongation under load of 2.0 cN/dtex | % | 7.0 | 2.7 | 2.7 | 2.7 | 2.7 |
| Relationship between widths of belt layer and belt reinforcing layer | | | 1.10 | 1.10 | -0.10 | 0.50 | 0.65 |
| (W_{c} - W_{b2})/(W_{b1} - W_{b2}) | | | | | | | |
| Steering stability (under normal travel conditions) | | | 3.0 | 3.7 | 3.6 | 3.7 | 3.7 |
| Steering stability (during circuit running) | | | 3.0 | 3.8 | 3.6 | 3.7 | 3.7 |
| Tire durability | | Index value | 100 | 94 | 98 | 102 | 101 |

**Table 1-2**

| | | | Example 3 | Example 4 | Comparative Example 3 | Comparative Example 4 |
|---|---|---|---|---|---|---|
| Belt layer | Belt cord structure | | Monofilament wire | Monofilament wire | Monofilament wire | Monofilament wire |
| | Wire diameter (cord diameter) | mm | 0.32 | 0.32 | 0.32 | 0.32 |
| Belt reinforcing layer | Type of organic fiber | | PET | PET | PET | PET |
| | Elongation under load of 2.0 cN/dtex | % | 2.7 | 2.7 | 1.5 | 4.4 |
| Relationship between widths of belt layer and belt reinforcing layer (W_{c} - W_{b2})/(W_{b1} - W_{b2}) | | | 0.18 | 0.82 | 0.50 | 0.50 |
| Steering stability (under normal travel conditions) | | | 3.6 | 3.7 | 3.8 | 3.0 |
| Steering stability (during circuit running) | | | 3.6 | 3.7 | 3.6 | 3.2 |
| Tire durability | | Index value | 100 | 100 | 98 | 100 |

As can be seen from Table 1, the tires of Examples 1 to 4, in comparison to that of Conventional Example 1 as the reference, provide improved steering stability under normal travel conditions and steering stability during circuit running in a highly compatible manner while maintaining tire durability.

On the other hand, in Comparative Example 1, since the end position of the belt reinforcing layer was on the outer side with respect to the end position of the inner belt layer in the tire width direction, shear stress is generated between the belt reinforcing layer and the inner belt layer, separation occurred, and the tire durability decreased. In Comparative Example 2, since the end position of the belt reinforcing layer was on the inner side with respect to the end position of the outer belt layer in the tire width direction, stress concentrated at the end portion of the outer belt layer in the tire width direction, separation occurred between the inner belt layer and the outer belt layer, and the tire durability decreased. In Comparative Example 3, the elongation under a load of 2.0 cN/dtex was small, and the rigidity of the belt reinforcing layer was too high, so that separation occurred between the belt layers and the belt reinforcing layer, resulting in a decrease in the tire durability. In Comparative Example 4, the elongation under a load of 2.0 cN/dtex was large, and the rigidity of the belt reinforcing layer was too low, so that the steering stability under normal travel conditions and the steering stability during circuit running decreased.

### Reference Signs List

1 Tread portion
2 Sidewall portion
3 Bead portion
4 Carcass layer
5 Bead core
6 Bead filler
7 Belt layer
7A Inner belt layer
7B Outer belt layer
7c Belt cord
8 Belt reinforcing layer
CL Tire equator
E End
W Width

## Claims

1. A pneumatic tire, comprising:
a tread portion (1) extending in a tire circumferential direction and having an annular shape;
a pair of sidewall portions (2) respectively disposed on both sides of the tread portion (1);
a pair of bead portions (3) each disposed on an inner side of the sidewall portions (2) in a tire radial direction;
a carcass layer (4) mounted between the pair of bead portions (3);
two belt layers (7) disposed on an outer circumferential side of the carcass layer (4) in the tread portion (1); and
a belt reinforcing layer (8) disposed on an outer circumferential side of the belt layers (7),
the belt layers (7) being formed of belt cords (7c) that are monofilament wires having a wire diameter of 0.30 mm or more and 0.45 mm or less,
an amount of wire defined as a product of a unit mass in g/m of the monofilament wire and a wire count of the monofilament wires per 50 mm width in a direction orthogonal to a longitudinal direction of the monofilament wires being within a range of from 50 to 280,
the belt reinforcing layer (8) being formed of a belt reinforcing cord that is an organic fiber cord made of a polyethylene terephthalate fiber, the belt reinforcing cord having an intermediate elongation under a load of 2.0 cN/dtex of from 2.0% to 4.0%,
**characterized in that**
an end (E_{c}) of the belt reinforcing layer (8) in a tire width direction is disposed between an end (E_{b1}) in the tire width direction of an inner belt layer (7A) located on an inner side in a tire radial direction of the belt layer (7) and an end (E_{b2}) in the tire width direction of an outer belt layer (7B) located on an outer side in the tire radial direction of the belt layer (7), and a width W_{c} between both ends (E_{c}) of the belt reinforcing layer (8) in the tire width direction, a width W_{b1} between both ends (E_{b1}) of the inner belt layer (7A) in the tire width direction, and a width W_{b2} between both ends (E_{b2}) of the outer belt layer (7B) in the tire width direction satisfy a relationship of 0.40 ≤ (W_{c} - W_{b2})/(W_{b1} - W_{b2}) ≤ 0.60.

## Patentansprüche

1. Luftreifen, umfassend:
einen Laufflächenabschnitt (1), der sich in Reifenumfangsrichtung erstreckt und eine Ringform aufweist;
ein Paar von Seitenwandabschnitten (2), die jeweils auf beiden Seiten des Laufflächenabschnitts (1) angeordnet sind;
ein Paar Wulstabschnitte (3), die jeweils auf einer Innenseite der Seitenwandabschnitte (2) in Reifenradialrichtung angeordnet sind;
eine Karkassenschicht (4), die zwischen dem Paar von Wulstabschnitten (3) angebracht ist;
zwei Gürtelschichten (7), die auf einer Außenumfangsseite der Karkassenschicht (4) in dem Laufflächenabschnitt (1) angeordnet sind; und
eine Gürtelverstärkungsschicht (8), die auf einer Außenumfangsseite der Gürtelschichten (7) angeordnet ist,
wobei die Gürtelschichten (7) aus Gürtelcordfäden (7c) ausgebildet sind, die Monofilamentdrähte sind, die einen Drahtdurchmesser von 0,30 mm oder mehr und 0,45 mm oder weniger aufweisen,
eine als ein Produkt einer Einheitsmasse in g/m des Monofilamentdrahts und einer Drahtzahl der Monofilamentdrähte pro 50 mm Breite in einer zu einer Längsrichtung des Monofilamentdrahts orthogonalen Richtung definierte Drahtmenge, die innerhalb eines Bereichs von 50 bis 280 liegt,
wobei die Gürtelverstärkungsschicht (8) aus einem Gürtelverstärkungscordfaden ausgebildet ist, der ein organischer Fasercordfaden ist, der aus einer Polyethylenterephthalatfaser hergestellt ist, wobei der Gürtelverstärkungscordfaden eine Zwischendehnung von 2,0 % bis 4,0 % unter einer Last von 2,0 cN/dtex aufweist,
**dadurch gekennzeichnet, dass**
ein Ende (E_{c}) der Gürtelverstärkungsschicht (8) in Reifenbreitenrichtung zwischen einem Ende (E_{b1}) in Reifenbreitenrichtung einer Innengürtelschicht (7A), die auf einer Innenseite in Reifenradialrichtung der Gürtelschicht (7) angeordnet ist, und einem Ende (E_{b2}) in Reifenbreitenrichtung einer Außengürtelschicht (7B), die auf einer Außenseite in Reifenradialrichtung der Gürtelschicht (7) angeordnet ist, angeordnet ist und eine Breite W_{c} zwischen beiden Enden (E_{c}) der Gürtelverstärkungsschicht (8) in Reifenbreitenrichtung, eine Breite W_{b1} zwischen beiden Enden (E_{b1}) der Innengürtelschicht (7A) in Reifenbreitenrichtung und eine Breite W_{b2} zwischen beiden Enden (E_{b2}) der Außengürtelschicht (7B) in Reifenbreitenrichtung ein Verhältnis von 0,40 ≤ (W_{c} - W_{b2}) / (W_{b1} - W_{b2}) ≤ 0,60 erfüllen.

## Revendications

1. Pneumatique, comprenant :
une partie de bande de roulement (1) s'étendant dans une direction circonférentielle de pneu et ayant une forme annulaire ;
une paire de parties de flanc (2) disposées respectivement de part et d'autre de la partie de bande de roulement (1) ;
une paire de parties de talon (3) disposées chacune sur un côté interne des parties de flanc (2) dans une direction radiale de pneu ;
une couche de carcasse (4) montée entre la paire de parties de talon (3) ;
deux couches de ceinture (7) disposées sur un côté circonférentiel externe de la couche de carcasse (4) dans la partie de bande de roulement (1) ; et
une couche de renfort de ceinture (8) disposée sur un côté circonférentiel externe des couches de ceinture (7),
les couches de ceinture (7) étant formées de câblés de ceinture (7c) qui sont des fils monofilaments ayant un diamètre de fil de 0,30 mm ou plus et de 0,45 mm ou moins,
une quantité de fil, définie comme un produit d'une masse unitaire en g/m des fils monofilaments et d'un nombre de fils des fils monofilaments par largeur de 50 mm dans une direction orthogonale à une direction longitudinale des fils monofilaments, étant dans une plage allant de 50 à 280,
la couche de renfort de ceinture (8) étant formée d'un câblé de renfort de ceinture qui est un câblé en fibre organique constitué d'une fibre de polyéthylène téréphtalate, le câblé de renfort de ceinture ayant un allongement intermédiaire sous une charge de 2,0 cN/dtex allant de 2,0 % à 4,0 %,
**caractérisé en ce que**
une extrémité (E_{c}) de la couche de renfort de ceinture (8) dans une direction de largeur de pneu est disposée entre une extrémité (E_{b1}) dans la direction de largeur de pneu d'une couche de ceinture interne (7A) située sur un côté interne dans une direction radiale de pneu de la couche de ceinture (7) et une extrémité (E_{b2}) dans la direction de largeur de pneu d'une couche de ceinture externe (7B) située sur un côté externe dans la direction radiale de pneu de la couche de ceinture (7), et une largeur W_{c} entre les deux extrémités (E_{c}) de la couche de renfort de ceinture (8) dans la direction de largeur de pneu, une largeur W_{b1} entre les deux extrémités (E_{b1}) de la couche de ceinture interne (7A) dans la direction de largeur de pneu, et une largeur W_{b2} entre les deux extrémités (E_{b2}) de la couche de ceinture externe (7B) dans la direction de largeur de pneu satisfont à une relation de 0,40 ≤ (W_{c} - W_{b2})/(W_{b1} - W_{b2}) ≤ 0,60.
